# EUROPEAN PATENT APPLICATION

(11) **EP 1 770 533 A1**
(43) Date of publication of application: **04.04.2007**
(21) Application number: 05748567.4
(22) Date of filing: 09.06.2005
(51) Int. Cl.: G06F 12/14, G06K 17/00, G06K 19/07, G06K 19/073

(54) **INFORMATION MANAGEMENT DEVICE AND INFORMATION MANAGEMENT METHOD**

(30) Priority: 15.06.2004 JP 2004177524
(71) Applicant: SONY CORPORATION, Tokyo 141-0001 (JP)
(72) Inventor: TAKEMURA, Toshiharu; c/o SONY CORPORATION, 1410001 (JP)
(74) Representative: Körber, Martin Hans
(86) International application number: PCT/JP2005/010600
(87) International publication number: WO 2005/124560

(57) **Abstract**

A memory space in an IC card is used in an effective manner. To this end, various procedures are provided. They include a procedure of dividing the memory space of the IC card into a plurality of memory areas, a procedure of releasing a memory area produced by the division, a procedure of changing the size of a memory area produced by the division, and a procedure of changing identification information assigned to a memory area produced by the division. It is allowed to release only an unnecessary memory area without influencing other memory areas being currently used. It is not necessarily required to definitively determine sizes of memory areas before starting using the memory areas, because it is allowed to change a memory area size when it is necessary to change the memory area size. The procedure of changing identification information allows it to correct a format into a desired format even when the division is performed in an order different from an expected order.

## Description

### Technical Field

The present invention relates to an information management apparatus and an information management method for managing access to information stored in a memory area with a relative large capacity, and more particularly to an information management apparatus and an information management method for securely managing access to electronic valuable information stored in a memory area in an information processing application such as electronic settlement.

More specifically, the present invention relates to an information management apparatus and an information management method for allocating various files in a memory area and managing information for use in providing service, and more particularly to an information management apparatus and an information management method for releasing a memory area allocated for use in providing service or changing an allocated memory area size.

### Background Art

Non-contact near-field communication systems, typified by IC cards, are widely used because of their easy operability. In typical use, a user brings an IC card into the proximity of a card reader/writer. The card reader/writer continuously performs polling to detect an IC card brought into the proximity. If an IC card is detected, a communication operation starts between the card reader/writer and the IC card. For example, valuable information such as electronic ticket information and personal authentication information such as password code are stored in an IC card, whereby authentication is performed for an IC card owner at a cash dispenser, an entrance of a concert hall, a ticket gate of a station, etc.

Recent advances in microfabrication techniques have made it possible to realize an IC card having relatively large memory capacity. This has made it possible to store a plurality of applications in an IC card thereby to use the same IC card for various purposes, such as electronic money used in electronic settlement or an electronic ticket for a particular musical concert. Herein, the term "electronic money" or "electronic ticket" is used to denote a mechanism of (electronically) settling an account via electronic data issued depending on a fund provided by a user or denote such electronic data itself.

It is known to install one of or both of an IC card and a card reader/writer each having a wireless non-contact communication interface and also a wired communication interface for connection with an external device in a portable telephone, a PDA (Personal Digital Assistance) device, a CE (Consumer Electronics) device, a personal computer, or a similar device thereby to allow such a device to have functionality of one of or both of an IC card and a card reader/writer. In such a device, an IC card can be used as a general-purpose near-field communication interface.

In a case of a near-field communication system including devices such as a computer or a home information appliance, non-contact communication using an IC card is performed in a one-to-one manner. A device may communicate with another-type of device other than a non-contact IC card. In this case, depending on an application, there is a possibility that one device communicates with a plurality of cards in a one-to-many manner.

Various applications using an IC card, such as electronic settlement or handling electronic valuable information, can be executed on an information processing terminal. For example, user interaction to an IC card can be made on an information processing terminal, using a user interface such as a keyboard or a display on the information processing terminal. In a case in which an IC card is connected to a portable telephone, the content stored in the IC card can be transmitted via the portable telephone. It is also possible to make payment using an IC card via a portable telephone connected to the Internet.

By building a file system for use by a particular service provider in a built-in memory of an IC card and managing information (such as user identification/authentication information, balance of valuable information, usage log information, etc.) used by the service provider to provide service and processed on the file system, it is possible to realize useful service based on non-contact near-field communication, which can be used instead of a conventional prepaid card or a service card for dedicated use at a particular store or the like.

Conventionally, IC cards are separately issued by respective service providers and are used by users. Therefore, users have to acquire IC cards for use respective desired services and have to carry the IC cards. In contrast, an IC card having a relative large memory space is capable of storing information for use in a plurality of services in a built-in memory of the single IC card (see, for example, Non-Patent Document 1).

In an initial state, the whole memory area of an IC card is managed by an IC card issuer. A service provider other than the IC card issuer is allowed to create a new file system by dividing the memory area and assign an application for providing service to the file system. The creation of the file system by dividing the memory area can be regarded as virtual issuing of an IC card. If dividing of the memory area is performed a plurality of times, a plurality of file systems reside in the memory area of the IC card, and thus this single IC card is capable of providing various applications.

As described above, although the whole memory area of the IC card is managed by the IC card issuer in the initial state, it is possible to use the single IC card for a plurality of services by dividing the memory space of the IC card into a plurality of memory areas and allocating the memory areas for dedicated use of respective services. Thus, dividing of the IC card can be regarded as virtual issuing of an IC card.

However, the size of the new memory area created by dividing the original memory area of the IC card is determined when the original memory area is divided. Once the new memory area is created, the created memory area is not allowed to be deleted.

Even if the created new memory area becomes unnecessary for some reason, it is not allowed to release the unnecessary memory area to return it to the IC card issuer. That is, it is not allowed to reallocate the unnecessary memory area to another service, and thus the limited resource is not fully used.

If it becomes necessary to change (increase or decrease) the size of an allocated memory area for some reason, there is no allowed procedure to change the size of the memory area from the initial size determined when the memory area was created by dividing the original memory area. That is, once the memory area is allocated, it is not allowed to expand the assigned memory area even if a greater memory size becomes necessary for providing service. Conversely, if a too large size including a margin is allocated when a memory area is created by dividing the original memory area, it is not allowed to reduce the size of the allocated memory area by releasing an unnecessary part of the memory area.

Non-Patent Document 1: "Wireless IC tag in the form of a very small chip is changing business scenes" (pp. 106 to 107, RFID Technology Section, Nikkei Business Publications, Inc., April 20, 2004)

### Disclosure of Invention

### Problems to be Solved by the Invention

It is a primary object of the present invention to provide an information management apparatus and an information management method capable of allocating memory areas to various files and properly managing information for use in providing service.

It is another object of the present invention to provide an information management apparatus and an information management method capable of releasing a memory area allocated for use in providing service and/or changing the size thereof thereby making it possible to effectively use the limited resource.

### Means for Solving the Problems

In view of the above, in a first aspect, the present invention provides an information management apparatus having a memory space and adapted to manage the memory space in a form in which the memory space is divided into one or more memory areas, the memory space including a first memory area owned by an original owner and one or more second memory areas divided from the first memory area owned by the original owner and respectively allocated to one or more service providers, the information management apparatus including allocated area release means for releasing a specified second memory area and returning the released second memory area to the first memory area in accordance with a request issued by a service provider.

Access to each memory area may be controlled in accordance with a corresponding key of a service provider.

The allocated area release means receives a data block including information identifying a second memory to be released, in the form of an allocated area release package encrypted using a key of the owner of the first memory area. The allocated area release means decrypts the allocated area release package using the key of the owner of the first memory area, and releases the second memory area specified by the data block.

In a second aspect, the present invention provides an information management apparatus having a memory space and adapted to manage the memory space in a form in which the memory space is divided into one or more memory areas, the memory space including a first memory area owned by an original owner and one or more second memory areas divided from the first memory area owned by the original owner and respectively allocated to one or more service providers, the information management apparatus including allocated area size changing means for expanding or reducing the size of a second memory area already divided from the first memory area in accordance with a request issued by a service provider.

The allocated area size changing means receives a data block including information identifying a second memory area whose size is to be changed, information indicating whether to expand or reduce the size of the second memory area, and information indicating the size by which to expand or reduce the second memory area, in the form of an allocated area size change package encrypted using a key of the owner of the first memory area. The allocated area size changing means decrypts the received allocated area size change package using the key of the owner of the first memory area, and changes the size of the second memory area by an amount specified by the data block.

When the size of the second memory area is expanded, the allocated area size changing means additionally allocates a free area of the first memory area to the second memory area by a specified amount by which to expand the size of the second memory area. On the other hand, when the size of the second memory area is reduced, the allocated area size changing means returns a free area of the second memory area to the first memory area by a specified amount by which to reduce the size of the second memory area.

In a third aspect, the present invention provides an information management apparatus having a memory space and adapted to manage the memory space in a form in which the memory space is divided into one or more memory areas, the memory space including a first memory area owned by an original owner and one or more second memory areas divided from the first memory area owned by the original owner and respectively allocated to one or more service providers, each second memory area having identification information assigned when the second memory area is divided from the first memory area, the information management apparatus including identification information changing means for changing identification information assigned to a second memory area in accordance with a request issued by a service provider.

The identification information changing means receives a data block including identification information of a second memory area whose identification information is to be changed and identification information to which to change the current identification information, in the form of an identification information change package encrypted using a key of the owner of the first memory area. The identification information changing means decrypts the received identification information change package using the key of the owner of the first memory area, and changes the identification information of the second memory area to the identification information specified by the data block.

The identification information changing means changes identification information of a second memory area owned by a service provider, for example, to identification information that has been released as a result of releasing a second memory area owned by another service provider.

Specific examples of information management apparatus include a non-contact IC card including a wireless communication unit and an IC chip having a data transmission/reception function and a data processing function, a contact IC card having terminals on the surface thereof, and an information communication terminal realized by installing an IC chip having similar functions to those of the contact/non-contact IC card in a portable telephone, a PHS (Personal Handyphone System) device, a PDA device, or a similar device. Hereinafter, these devices will also be referred to generically as "IC cards".

The information management apparatus has a memory area such as an EEPROM including a data storage memory, a data processing unit, and a data communication unit. In the case of the portable telephone, an external storage medium such an IC card including a built-in IC chip may be removably attached to the portable telephone. A SIM (Subscriber Identity Module) in which subscriber information issued by a portable telephone company may be installed on the IC chip. The information management apparatus may perform data communication via an information communication network such as the Internet and/or may perform direct data communication with an external terminal via a wired or wireless communication channel.

The present invention relates to a technique to provide service such as transmission of valuable information that needs high security by using an IC card having high resistance to tampering and having an authentication capability. In general, the memory disposed in the IC card is divided into a plurality of areas, and access to the IC card is controlled in accordance with passwords uniquely assigned to the respective areas. Herein, the areas correspond to file systems built by dividing the memory space, or directories or individual files in the file system. Note that dividing of the memory space of the IC card into a plurality of file systems can be regarded as virtual issuing of IC cards.

The dividing of the memory space of the IC card is basically performed under the authority of the IC card issuer. The memory areas created by the division are allocated to respective service providers and managed by the respective service providers. However, the sizes of memory areas created by the division are determined when the division is performed, and, once the memory areas are created by the division, the memory areas are not allowed to be deleted. This means that even when a particular memory area becomes unnecessary, it is not allowed to release the unnecessary memory area and it is not allowed to reallocate this memory area for use of another service. Thus, the resource is not effectively used. Furthermore, when the size of a memory area created by the division becomes insufficient or excessive, it is not allowed to expand or reduce the size.

To avoid the above problem, the information management apparatus according to an embodiment of the present invention has the capability of dividing the memory space of the IC card into a plurality of memory areas, releasing a memory area created by the division, changing the size of a memory area created by the division, and changing an identification number assigned to a memory area created by the division.

When the memory device is logically divided into a plurality of memory areas and used separately, there is a possibility that a particular memory area becomes unnecessary. In the case of the conventional memory device, when service for a user has already been registered in the memory device and various kinds of personal information are stored in the memory device, the only one allowable method to delete the information associated with this service is to initialize the memory device. However, the initialization causes all information including the personal information to be lost. This is very inconvenient for users. In contrast, the information management apparatus according to the present invention allows it to independently release only a particular specified memory area created by the division. That is, it is possible to delete only an unnecessary memory area without influencing the other memory areas being currently used.

When the memory device is logically divided into a plurality of memory areas, it is not necessarily possible to definitively determine the size of each memory area when the division is performed. However, in the conventional memory device, because it is not allowed to change the area size after the division is performed, it is necessary to determine the size of each memory area so as to have a sufficiently large margin to avoid occurrence of insufficiency of memory capacity in the future use of the memory device. However, this results in ineffective use of the memory areas. In contrast, in the information management apparatus according to the present invention, because it is allowed to change the size of an arbitrary specified memory area created by the division, it is not necessarily needed to definitively determine the memory sizes.

When the memory device is logically divided into a plurality of memory areas via a plurality of dividing operations, it is not necessarily possible to perform the dividing operations in a correct order. If the dividing operations are performed in an order different from the correct order, identifications numbers assigned to the respective memory areas become different from expected numbers, and thus the format thereof becomes different from an expected format. In contrast, in the information management apparatus according to the present invention, because it is allowed to reassign identification numbers after the division is performed, it is possible to correct the format into a desired format.

### Advantages

The present invention provides an information management apparatus and an information management method capable of allocating memory areas to various files and properly managing information for use in providing service.

The present invention also provides an information management apparatus and an information management method capable of releasing a memory area allocated for use in providing service and/or changing the size thereof thereby making it possible to effectively use the limited resource.

Further objects, features and advantages of the present invention will become apparent from the following detailed description of exemplary embodiments with reference to the attached drawings.

### Brief Description of the Drawings

[FIG. 1] Fig. 1 is a schematic diagram showing a configuration of a non-contact IC card communication system according to an embodiment of the present invention.
[FIG. 2] Fig. 2 is a schematic diagram showing a general configuration of a service providing system for providing service associated with electronic money, electronic tickets, or similar valuable information using an IC card.
[FIG. 3] Fig. 3 shows a memory area in a state in which only a file system of an original card issuer is managed by the original card issuer.
[FIG. 4] Fig. 4 shows that a card issuer is allowed to lend (or convey) a particular free memory space in a file system of the card issuer to a memory area manager.
[FIG. 5] Fig. 5 shows a state in which a particular service provider has built a new file system in an allocated area whose usage is permitted by a card issuer.
[FIG. 6] Fig. 6 shows a state in which a common memory area manager manages a common memory area allocated under permission of a card issuer, the common memory area being assigned a system code SC0.
[FIG. 7] Fig. 7 shows a structure including a plurality of file systems in a memory area of an IC card.
[FIG. 8] Fig. 8 schematically shows a functional structure of firmware of an IC card.
[FIG. 9] Fig. 9 shows a process of dividing a memory area.
[FIG. 10] Fig. 10 shows a process of dividing a memory area.
[FIG. 11] Fig. 11 shows a process of dividing a memory area.
[FIG. 12] Fig. 12 shows a process of releasing an allocated memory area.
[FIG. 13] Fig. 13 shows a process of releasing an allocated memory area.
[FIG. 14] Fig. 14 shows a process of changing the size of an allocated memory area.
[FIG. 15] Fig. 15 shows a process of changing the size of an allocated memory area.
[FIG. 16] Fig. 16 shows a process of changing an identification number assigned to a memory area.
[FIG. 17] Fig. 17 shows a process of changing an identification number assigned to a memory area.
[FIG. 18] Fig. 18 shows a preprocess performed before a file system is divided.
[FIG. 19] Fig. 19 shows a process of polling an IC card, performed by an IC card issuer.
[FIG. 20] Fig. 20 shows a process performed by an IC card issuer to issue a file system division request to an IC card.
[FIG. 21] Fig. 21 shows a manner in which a memory area of an IC card is divided and a new file system is produced.
[FIG. 22] Fig. 22 shows a process of resetting an issuer key K_{Ii} and a system code SCᵢ, performed by a new service provider after a file system dedicated to the new service provider has been built in a memory area of an IC card.
[FIG. 23] Fig. 23 shows a preprocess performed before a file system built via a dividing process is deleted.
[FIG. 24] Fig. 24 shows a process performed by an IC card issuer to issue an allocated area release request to an IC card.
[FIG. 25] Fig. 25 shows a manner in which a memory area allocated on an IC card via a dividing process is released and returned to a file system of an IC card issuer.
[FIG. 26] Fig. 26 shows a preprocess performed before the size of a file system built via a dividing process is changed.
[FIG. 27] Fig. 27 shows a process performed by an IC card issuer to issue an allocated area size change request to an IC card.
[FIG. 28] Fig. 28 shows a manner in which the size of a memory area allocated on an IC card via a dividing process is changed.
[FIG. 29] Fig. 29 schematically shows a hardware configuration of an IC card according to an embodiment of the present invention.

### Reference Numerals

- 1:: card reader/writer
- 2:: IC card
- 3:: controller
- 111:: issuer communication apparatus
- 112:: operator communication apparatus
- 113:: manufacturer communication apparatus
- 114:: memory area division/registration apparatus
- 115:: operation file registration apparatus
- 116:: IC card
- 117:: network
- 121:: card issuer
- 122:: card memory area operator
- 123:: apparatus manufacturer
- 124:: card memory area user
- 1001:: antenna unit
- 1002:: analog unit
- 1003:: digital control unit
- 1004:: memory
- 1005:: external device interface
- 1006:: carrier wave detector
- 1100:: portable terminal
- 1110:: program control unit
- 1120:: display unit
- 1130:: user input unit
- 1140:: power supply controller

### Best Mode for Carrying Out the Invention

The present invention is described in further detail below with reference to embodiments in conjunction with the accompanying drawings.

### A. Non-Contact Data Communication System Using IC Card

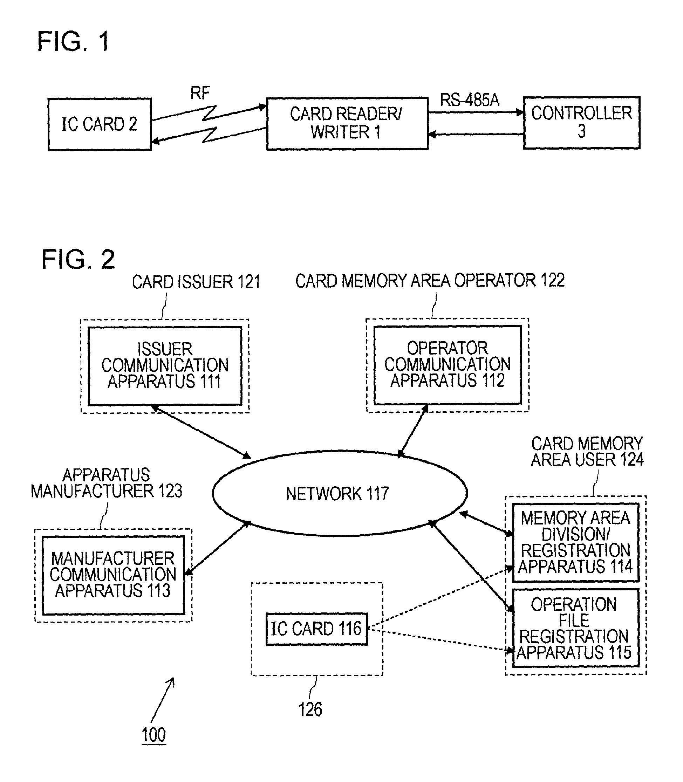

Fig. 1 is a schematic diagram showing a non-contact IC card communication system according to an embodiment of the present invention.

The non-contact IC card system includes a card reader/writer 1, an IC card unit 2, and a controller 3. In this non-contact IC card system, data is allowed to be transmitted using an electromagnetic wave between the card reader/writer 1 and the IC card unit 2 which are not in direct contact. More specifically, if the card reader/writer 1 transmits a command to the IC card unit 2, the IC card unit 2 performs a process in accordance with the received command. The IC card unit 2 transmits response data according to the result of the process to the card reader/writer 1.

The card reader/writer 1 is connected to the controller 3 via a particular interface (such as that according to the RS-485A standard). The controller 3 controls the operation of the card reader/writer 1 by supplying a control signal to the card reader/writer 1.

In addition to the non-contact IC card interface shown in Fig. 1, the IC card unit 2 may also include an interface for cable communication, such as a USRT interface or an I²C interface.

### B. Operation of IC Card

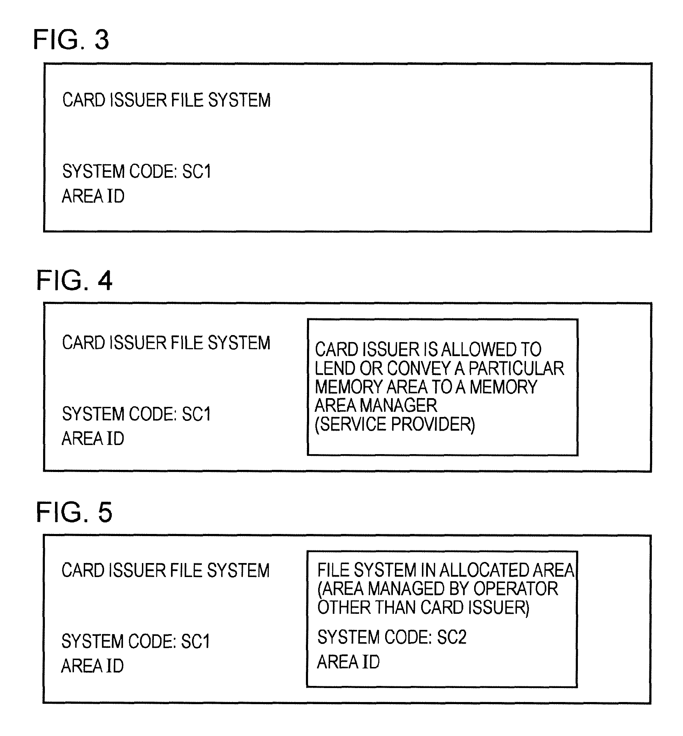

Fig. 2 schematically shows a general configuration of a service providing system for providing service associated with electronic money, electronic tickets, or similar valuable information using an IC card.

The system 100 shown in Fig. 2 includes, for example, an issuer communication apparatus 111 for use by an IC card issuer 121, an operator communication apparatus 112 for use by a card memory area operator 122, a manufacturer communication apparatus 113 for use by an apparatus manufacturer 123, a memory area dividing apparatus 114 for use by a card memory area user 124, and an operation file registration apparatus 115.

When the IC card issuer 121 issues an IC card unit 116 to a card owner 126, a file data associated with service provided by the card memory area user 124 is registered in the IC card unit 116 according to predetermined conditions so that the card owner 126 is allowed to use the single IC card unit 116 to receive service from both the IC card issuer 121 and the card memory area user 124.

In the system 100, as shown in Fig. 2, the issuer communication apparatus 111, the operator communication apparatus 112, the manufacturer communication apparatus 113, the memory area dividing apparatus 114, and the operation file registration apparatus 115 are connected to each other via a network 117.

The IC card issuer 121 issues the IC card unit 116 and provides service using the IC card unit 116.

If the card memory area operator 122 receives a request from the IC card issuer 121, the card memory area operator 122 lends a particular memory area, which is selected from the memory area (semiconductor memory) of the IC card 116 issued by the IC card issuer 121 and which is not used by the IC card user 121, to the card memory area user 124.

If the apparatus manufacturer 123 receives the request from the card memory area operator 122, the apparatus manufacturer 123 produces a memory area dividing apparatus 114 according to the request and delivers the produced memory area dividing apparatus 114 to the card memory area user 124.

The card memory area user 124 is a service provider that requests the card memory area operator 122 to make it possible for the card memory area user 124 to use a particular memory area of the IC card unit 116 thereby to provide service. The card memory area user 124 corresponds to the service provider (described above) that creates a sub memory area by dividing an original memory area and creates a new file system in the sub memory area to provide service by using the created file system.

The card owner 126 is a person who receives an IC card unit 116 issued by the IC card issuer 121 and receives service provided by the IC card issuer 121. After the card owner 126 has acquired the IC card unit 116, when the card owner 126 wants to receive service provided by the card memory area user 124, the card owner 126 stores file data associated with the service provided by the card memory area user 124 into the IC card unit 116 by using the memory area dividing apparatus 114 and the operation file registration apparatus 115. The storage of the file data makes it possible for the card owner 126 to receive the service provided by the card memory area user 124.

The system 100 is configured such that the service is provided by the IC card issuer 121 and the card memory area user 124 by using the single IC card unit 116 and such that it is difficult for an unauthorized person to write data into or rewrite data existing in a memory area in which file data associated with service provided by the IC card issuer 121 or the card memory area user 124 is stored.

Although in the example shown in Fig. 2, there are a single IC card issuer 121, a single card memory area user 124, and a single card owner 126, there is no particular restriction on the numbers thereof.

The IC card unit 116 may be a data communication device in the form of a card or may be a portable telephone (or another type of portable terminal or a CE device) in which a semiconductor chip on which IC card functions are implemented is installed.

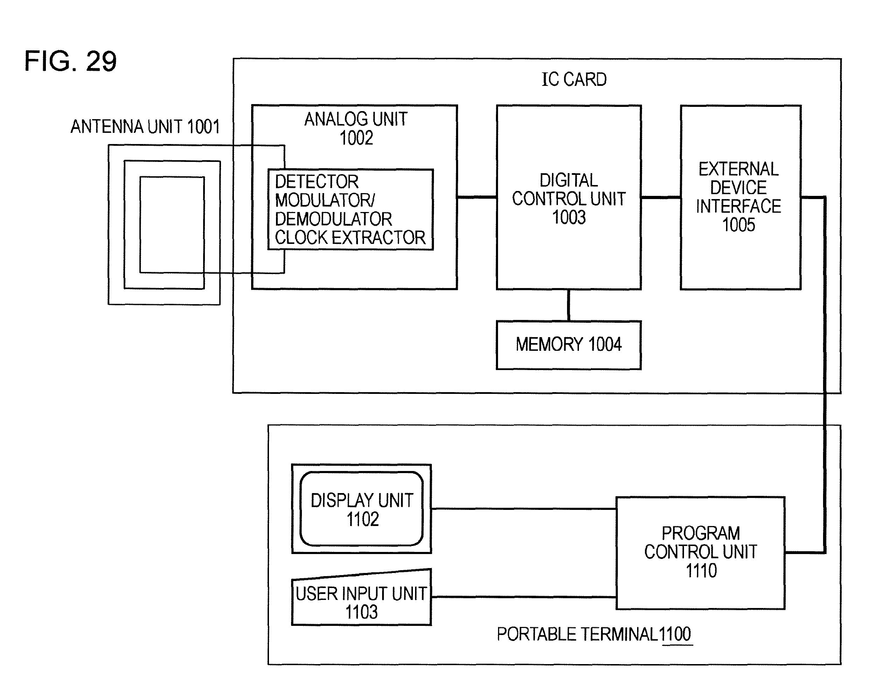

Fig. 29 schematically shows a hardware configuration of an IC card unit according to an embodiment of the present invention. As shown in Fig. 29, the IC card unit includes an analog unit 1002 connected to an antenna unit 1001, a digital control unit 1003, a memory 1004, and an external device interface 1005, and the IC card unit is disposed inside a portable terminal 1100. The IC card unit may be constructed on a single semiconductor circuit chip, or may be constructed using two semiconductor circuit chips one of which serves as a RF analog front end and the other one as a logic circuit.

The antenna unit 1001 serves to perform non-contact transmission of data to and from a card reader/writer (not shown). The analog unit 1002 performs processing such as detection, modulation/demodulation, clock extraction etc. on the analog signal to be transmitted from the antenna unit 1001 or the analog signal received by the antenna unit 1001. The antenna unit 1001 and the analog unit 1002 form a non-contact connection interface between the IC card unit and the card reader/writer.

The digital control unit 1003 generally controls various operations of the IC card, such as processing on transmit/receive data. The digital control unit 1003 has an addressable local memory 1004 for storing an application such as electronic money or an electronic ticket, loading a program code executed by the digital control unit 1003, and/or storing work data being executed. As will be described in detail later, the memory area of the memory 1004 is allowed to be divided into file systems for use by respective service providers. In accordance with a request issued by a service provider, the digital control unit 1003 performs various processes such as dividing a first memory area owned by an original owner into a plurality of second memory areas and allocating the second memory areas to another service provider, releasing the allocation of a second memory area and returning it to the first memory area, expanding or reducing the size of an allocated second area, and changing identification information associated with an allocated second area.

The external device interface 1005 is a functional module adapted to connect the digital control unit 1003 to a device such as a portable terminal 1100 by using an interface protocol different from that of the non-contract interface that connects the digital control unit 1003 to the card reader/writer (not shown). The data written in the memory 1004 can be transferred to the portable terminal 1100 via the external device interface 1005.

In the communication with the card reader/writer, data received from the card reader/writer is directly transmitted to the portable terminal 1100 via the external device interface 1005, or is transmitted thereto after being converted into a proper data format or another packet structure. Conversely, data received from the portable terminal 1100 via the external device interface is directly transmitted to the card reader/writer via the non-contact interface, or is transmitted after being converted into a proper data format or another packet structure.

In the present embodiment, it is assumed that the IC card unit is disposed in the inside of the portable terminal 1100, and a wired connection interface such as a UART (Universal Asynchronous Receiver Transmitter) interface is used as the external device interface 1005. However, in the present invention, there is no particular limitation on the specifications of the external device interface 1105, and other wired/wireless connection interfaces may be used. For example, a wireless communication interface such as a Bluetooth communication interface or an IEEE.802.11 interface may be employed.

The IC card unit is driven by a radio wave received from the card reader/writer via an antenna unit 101. Alternatively, a part or all of the IC card unit may be operated using electric power supplied by the portable terminal 1100.

As for the portable terminal 1100, an information processing terminal such as a portable telephone, a PDA device, or a personal computer (PC) is used. The portable terminal 1100 includes a program control unit 1101, a display unit 1102, and a user input unit 1103.

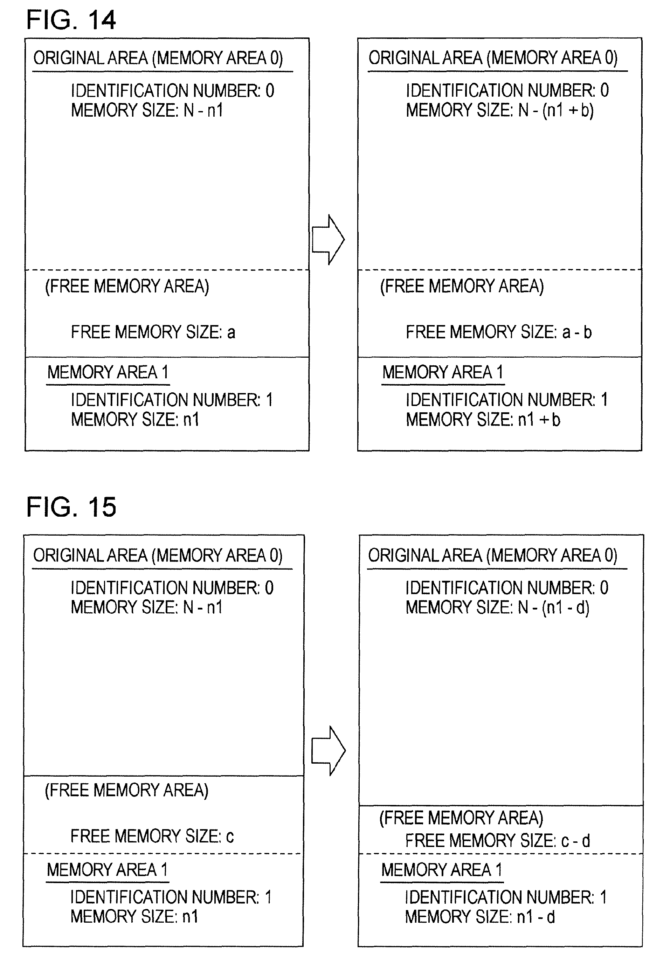

The program control unit 1101 includes, for example, a microprocessor, a RAM, and a ROM (any of which is not shown in Fig. 15). In accordance with a program code stored in the ROM, the microprocessor performs various kinds of service processing using the RAM as a work area. The service processing includes processing associated with various functions of the portable terminal 1100 such as the portable telephone and also includes processing associated with the IC card unit. The program control unit 1101 may include an external storage device such as a hard disk and/or other peripheral devices.

The program control unit 1101 is capable of accessing the IC card unit via the external device interface 1005.

The display unit 1102 is realized, for example, by a liquid crystal display, and is capable of displaying a result of processing performed by the program control unit 1101 to inform a user of the result.

The user input unit 1103 is realized by a keyboard, a jog dial, or a touch panel provided on the surface of the screen of the display unit 1102, and is used by a user to input a command or data to the portable terminal 1100.

The program control unit 1101 in the portable terminal 1100 is driven using electric power supplied from a main power supply such as a battery (not shown).

If a user of the portable terminal 1100 including the IC card unit brings the portable terminal 1100 to a location close to a particular card reader/writer, wireless communication is started between the IC card unit and the card reader/writer, and data is transmitted between the digital control unit 1003 and the card reader/writer via the analog unit 1002 and the antenna unit 1001 serving as the wireless connection interface.

### C. File System

The IC card is adapted to be highly resistant to tampering and has an authentication capability. This capability or feature of the IC card unit allows it to provide service that requires high security such as handling of valuable information. In the present embodiment, a particular memory area is allocated to a file system for use by each service provider, whereby a signal IC card is shared by a plurality of service providers to provide a plurality of services using the single IC card.

In an initial state, the whole memory area in the IC card is managed by an IC card issuer. If a service provider having the authority of dividing the memory area passes an authentication check by the IC card issuer, the service provider is allowed to divide the current memory area to build a new file system.

After the memory area has been divided and the new file system has been created therein, to access the new file system, it is required to pass an authentication check performed not by the IC card issuer but by the service provider managing the file system. This means that a boundary between file systems functions as a fire wall which protects each file system from unauthorized access from other file systems. A user of the IC card is allowed to receive various kinds of services using the single IC card in a similar manner to the manner in which a particular service is received using a dedicated IC card issued by a service provider. By creating a plurality of sub memory areas by dividing the memory area a plurality of times, it is possible to build a plurality of file systems in respective sub memory areas in the IC card. Thus, building of a file system by dividing the memory area can be regarded as virtual issuing of an IC card.

Now, referring to Figs. 3 to 6, modes in which to use memory areas in the IC card are described.

Fig. 3 shows a memory area in a state in which only a file system of an original card issuer is managed by the original card issuer. A system code SC1 of the original card issuer is assigned by a system code managing mechanism. When an external device or a program accesses the file system of the card issuer, SC1 is used as an identification code (that is, a request command includes SC1 as an argument).

Fig. 4 shows that the card issuer is allowed to lend (or convey) a particular free memory space in the file system of the card issuer to a memory area manager. At this stage, the file system in the memory area has not yet been divided. The card issuer is allowed to lend particular memory areas to a plurality of memory area managers, as long as the file system of the card issuer includes a free memory area. For example, in a case in which file systems are identified by 4-bit system codes, the original memory area can be divided into up to 16 sub memory areas (by performing dividing 15 times).

Fig. 5 shows a state in which another service provider has built a new file system in an area under the permission of the IC card issuer. This new file system is assigned a system code SC2 by the system code managing mechanism. When an external device or a program accesses the file system managed by the memory area manager (the service provider), SC2 is used as an identification code (that is, a request command includes SC2 as an argument).

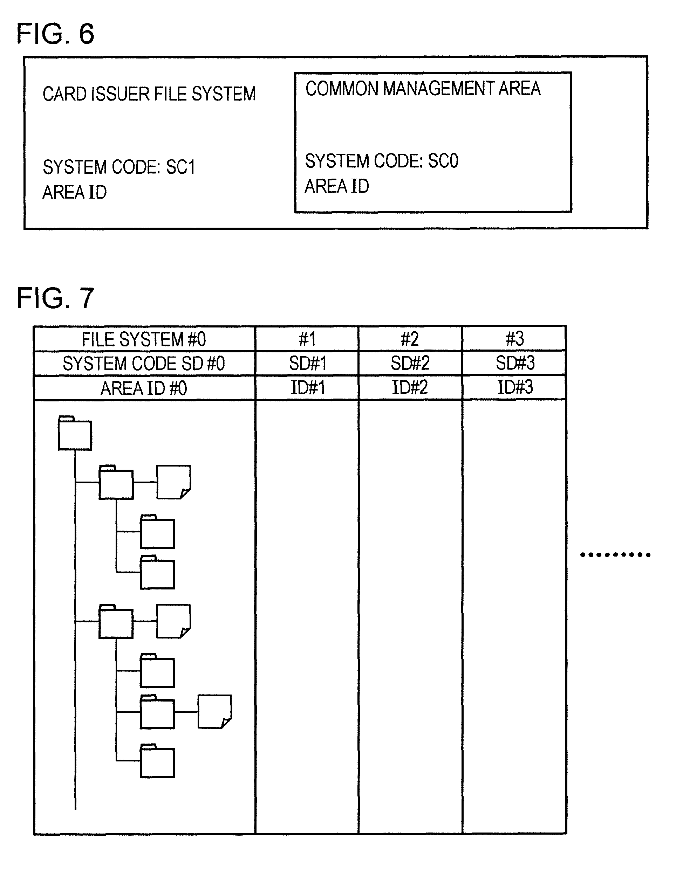

Fig. 6 shows a state in which a common memory area manager manages a sub memory area as a common memory area permitted by the card issuer. This common memory area is assigned a system code SC0. When an external device or a program accesses a file system in this memory area managed by the common memory area manager, SC0 is used as an identification code (that is, a request command includes SC0 as an argument).

After the dividing operation has been performed a plurality of times, a plurality of file systems reside in the memory area of the IC card as shown in Fig. 7. The original card issuer and service providers who have acquired their own file system on the IC card from the original card issuer are allowed to allocate areas or services using their own file system and use them in their business.

A manner in which memory areas in a single file system are used is described. Note that memory areas may be used in a similar manner in other file systems.

In the file system, one or more files are stored to realize an application such as electronic settlement or transmission/reception of electronic valuable information to/from the external. A particular memory area allocated to a particular application is called "service memory area". Use of an application, that is, a processing operation of accessing a service memory area corresponding to the application is called "service". Specific examples of services include accessing to a memory area to read data, accessing to a memory area to write data, and increasing/reducing of valuable information such as electronic money.

To limit services, that is, use of applications depending on whether a user has the authority of accessing the applications, a password called a PIN is assigned to each application and a PIN is verified when execution of a service is requested. In accessing to a service memory area, data is encrypted depending on the required security level of the application.

In the present embodiment, each file system built in the memory area in the IC card is organized in the form of a hierarchical structure similar to a "directory" structure. Each application allocated to a particular memory area is allowed to be registered in a particular area in a particular hierarchical level.

For example, a plurality of applications used in a sequence of transactions or a plurality of applications closely related to each other may be registered in a particular service memory area (and memory areas closely related to each other may be registered in a particular parent memory area). Registering of applications in memory areas in the above-described systematic manner makes it possible for a user to easily manage the applications.

To control access to file systems in a hierarchical manner, in addition to PINs assigned to respective applications, PINs may be assigned to respective memory areas. For example, access may be permitted in such a manner that when a user inputs a PIN corresponding to a particular memory area, verification and mutual authentication are performed, and permission to access all applications in this memory area (and sub memory areas) is given to the user if the verification and the mutual authentication are successfully passed. This makes it possible to obtain permission to access all applications used in a sequence of transactions simply by inputting a PIN corresponding to a particular memory area, and thus it becomes possible to efficiently control access. For users, it becomes possible to easily use devices.

The permission to access a particular service memory area may be given on a service-by-service basis, and a password code may be assigned to each service executed in the service memory area. For example, when services in a particular service memory area include "read" and "read and write", different PINs are assigned to these respective services. In an example of valuable information such as electronic money, different PINs may be assigned to "increase" and "reduce". The permission to access a particular service memory area may also given in such a manner that reading is permitted without necessitating inputting of a PIN, but inputting of a PIN is required to obtain permission to write.

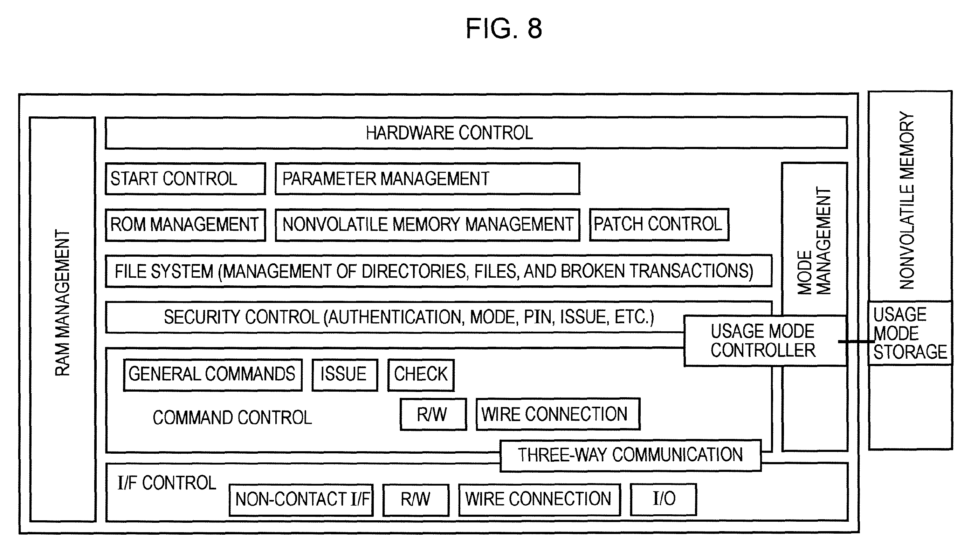

Fig. 8 schematically shows a functional structure of firmware of an IC card in which a plurality of file systems are allowed to be built in an internal memory.

An interface (I/F) control unit controls protocol in communication with the card reader/writer via the non-contact IC card interface, communication as the card reader/writer, communication via a wired connection interface, and communication via other I/O interfaces.

A command control unit processes a command received from the outside via the interface control unit, issues a command to the outside, and checks a command.

A security control unit performs processing associated with security, such as authentication to determine whether to permit a user to access a memory area or a file system in each memory area, and verification of a PIN to determine whether to permit a user to use a directory or a service in a file system.

A file system control unit controls file systems in terms of allocation of a memory area to a file system and deallocation of a memory area and manages a directory structure of a file system.

A mode management unit manages modes of all file systems as a whole and separately manages modes of respective file systems. Specific examples of modes include a mode in which using of file systems is disabled and a mode in which using of file systems is enabled.

In addition to the units described above, the firmware also includes units for controlling hardware in the IC card, such as a start control unit, a ROM control unit, a parameter management unit, a nonvolatile memory management unit, and a patch control unit.

### D. Allocation and Deallocation of File System and Change of Area Size

In the present embodiment, the memory space in the IC card is divided into sub memory spaces, and a plurality of file systems are built in the respective sub memory spaces. Building a file system in a sub memory space created by dividing the original memory space can be regarded as virtual issue of an IC card. That is, this makes it possible to use a single IC card to provide various kinds of services which otherwise would need a plurality of separate IC cards.

Furthermore, in the present embodiment, it is allowed to release an allocated memory area and reallocate the released memory area to another service. It is also allowed to change the size of an allocated memory area to handle an insufficient or excess memory size.

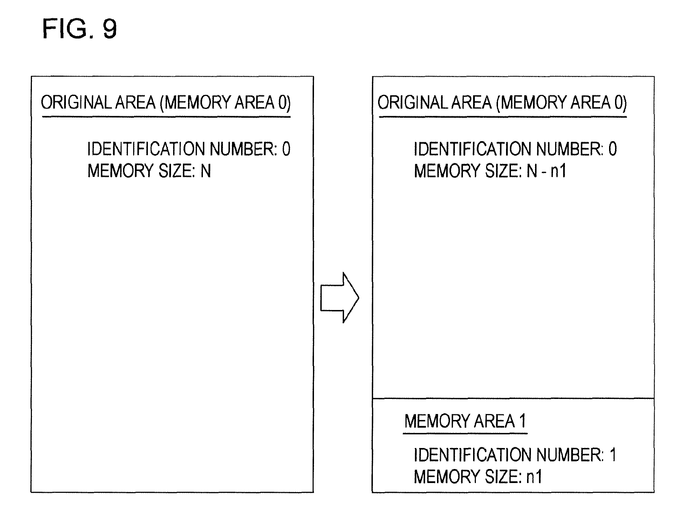

Figs. 9 to 11 show a procedure of dividing a memory area.

A left-hand part of Fig. 9 shows a state in which a memory space in an IC card is not yet divided. In this state, the memory area is denoted by "memory area 0" and the memory area 0 is assigned an identification number 0. The memory size of the memory area 0 in this state is assumed to be N. The memory area 0 in this state is allowed to be divided to create a "memory area 1" having a specified memory size with an identification number 1, as shown on a right-hand side of Fig. 9. If the specified memory size of the memory area 1 is n1, then the memory size of the original memory area 0 becomes N - n1.

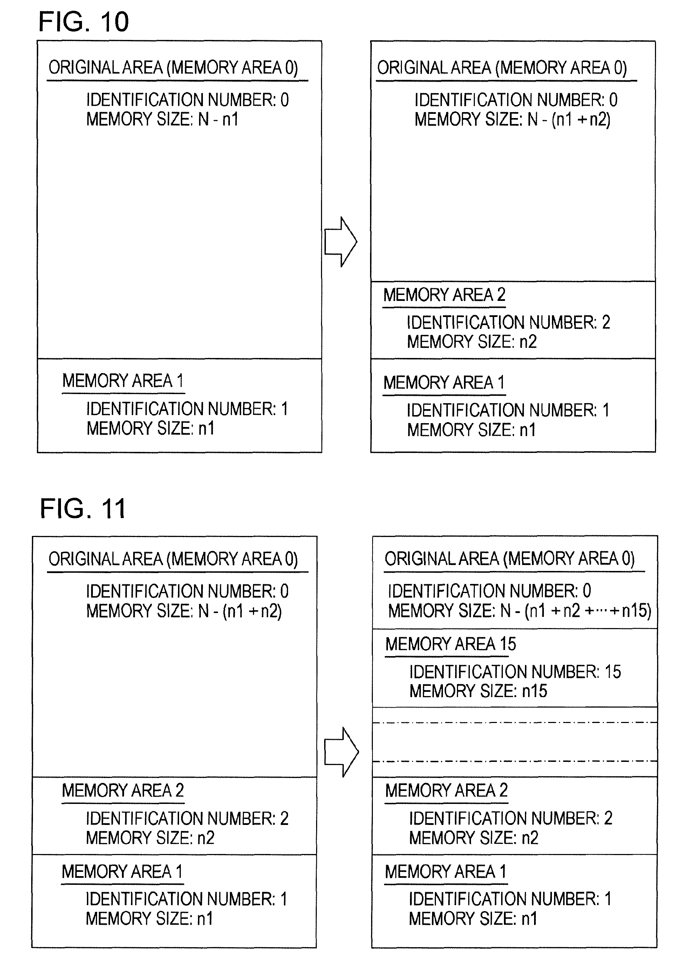

A right-hand part of Fig. 10 shows a state in which the memory area 0 in the state shown on the right-hand side of in Fig. 9 has been divided one more time. A right-hand part of Fig. 11 shows a state in which the memory area 0 in the state shown on the right-hand side of in Fig. 9 has been divided a total of 15 times.

When memory areas are created by dividing the original memory area until the state shown on the right-hand side of Fig. 11 has been achieved after the original memory area 0 has been divided a total of 15 times, if the sizes of the created memory areas are given by n1, n2, n3,..., n14 and n15 in the order in which new memory areas are created by division, then the memory size of the original memory area 0 becomes equal to N - (n1 + n2 + n3 +...+ n14 + n15). The memory areas created by division are serially assigned identification numbers 1, 2, 3,..., 14, 15 in the order in which new memory areas are created by division. The process of dividing the memory area will be described in further detail later.

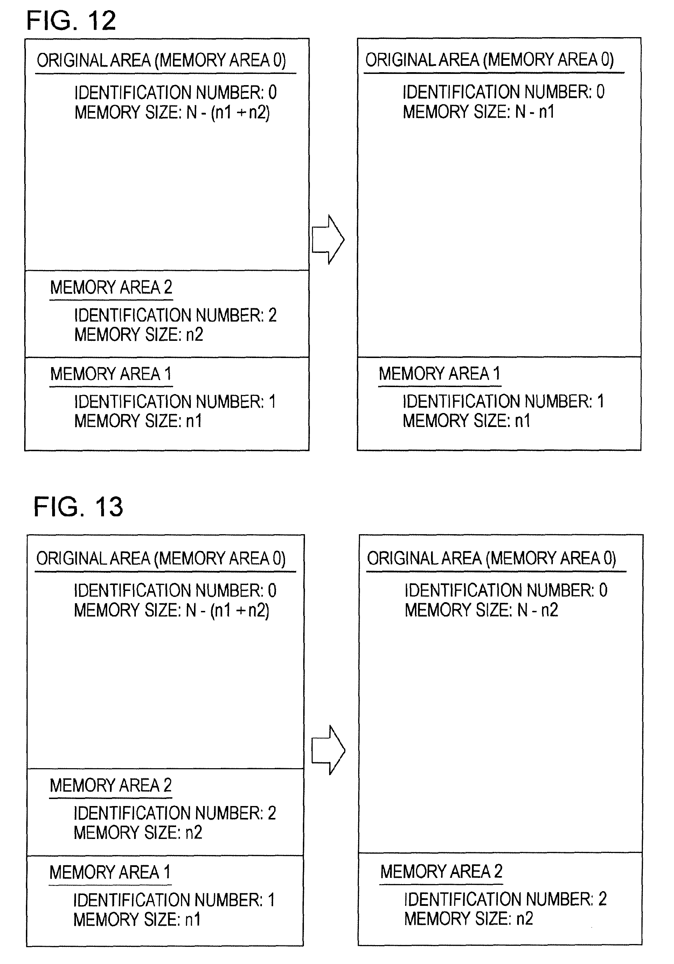

Figs. 12 to 13 show a procedure of releasing memory areas created by division. Herein, by way of example, it is assumed that releasing is performed for the IC card in a state in which the memory area 1 and the memory area 2 have been created by dividing the memory area 0.

Fig. 12 shows a manner in which the memory area 2 is released. The IC card issuer who is the owner of the original memory area has the authority to release the memory area 2, that is, the authority to release allocation. Note that the owner of the original memory area is allowed to release the memory area 2 without using information that cannot be managed by the owner of the original memory area, such as key information associated with the memory area 2. More specifically, releasing of an allocated memory area is performed using information packaged using key information of the owner of the original memory area, wherein the package information includes, for example, the identification number and the memory size of the memory area to be released. If the releasing is completed, the resultant released memory area is returned to the owner of the original memory area, that is, the IC card issuer. More specifically, the released memory area comes to belong to the memory area 0. The process of releasing an allocated memory area will be described in detail later.

Fig. 13 shows a manner in which the memory area 1 is released. After the memory area 1 is released in a similar manner to that described above with reference to Fig. 12, the released memory area is returned to the IC card issuer who is the owner of the original memory area so that the released memory area comes to belong to the memory area 0. Note that in the example shown in Fig. 12, it is assumed that information associated with the memory area 2, such as the identification number, is maintained without being changed when the memory area 1 is released.

Figs. 14 and 15 show a procedure of changing the size of a memory area created by division.

Fig. 14 shows a manner in which the size of the memory area 1 is expanded. The IC card issuer who is the owner of the original memory area has the authority to expand the memory size of the memory area 1.

Note that the owner of the original memory area is allowed to expand the memory size of the memory area 1 without using information that cannot be managed by the owner of the original memory area, such as key information associated with the memory area 1. More specifically, expanding of the memory size of a specified memory area is performed using information packaged using key information of the owner of the original memory area, wherein the package information includes, for example, the identification number and the memory size of the memory area to be expanded. The process of changing the memory size of a memory area will be described in detail later.

In the expansion of the memory size of a memory area, it is required that the original memory area 0 should have a free memory area with a size equal to or greater than the specified size by which to expand the memory area.

Fig. 15 shows a manner in which the size of the memory area 1 is reduced. The IC card issuer who is the owner of the original memory area has the authority to reduce the memory size of the memory area 1.

Note that the owner of the original memory area is allowed to reduce the memory size of the memory area 1 without using information that cannot be managed by the owner of the original memory area, such as key information associated with the memory area 1. More specifically, reduction of the memory size of a specified memory area is performed using information packaged using key information of the owner of the original memory area, wherein the package information includes, for example, the identification number and the memory size of the memory area to be reduced. The process of changing the size of a memory area will be described in detail later.

In the reduction of the memory size of a memory area, it is required that the memory area to be reduced should have a free memory area with a size equal to or greater than the specified size by which to reduce the memory area.

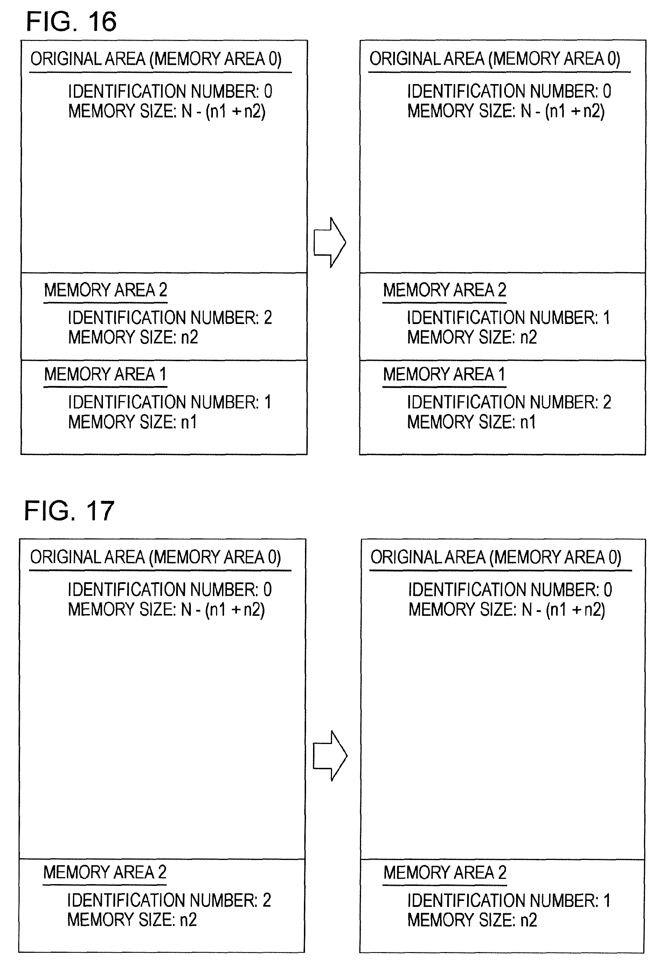

Figs. 16 and 17 show a procedure of changing identification numbers assigned to memory areas created by division. Herein, by way of example, it is assumed that changing of identification numbers is performed for the IC card in a state in which the memory area 1 and the memory area 2 have been created by dividing the memory area 0.

Fig. 16 shows a manner in which memory identification numbers are exchanged between the memory area 1 and the memory area 2.

The IC card issuer who is the owner of the original memory area has the authority to exchange the memory identification numbers. Note that the owner of the original memory area is allowed to exchange the memory identification numbers between memory areas without using information that cannot be managed by the owner of the original memory area, such as key information associated with the memory area 1 and the memory area 2. More specifically, exchanging of the memory identification numbers is performed using information packaged using key information of the owner of the original memory area, wherein the package information includes, for example, the identification numbers and the memory sizes of the memory areas whose identification numbers are to be exchanged.

Note that in the exchanging of memory identification numbers, the identification number 0 assigned to the original memory area is not allowed to be subjected to the exchanging of memory identification numbers.

Fig. 17 shows a manner in which the memory identification number of the memory area 2 is changed to 1 which is not used for any existing memory area.

The IC card issuer who is the owner of the original memory area has the authority to change the memory identification number. Note that the owner of the original memory area is allowed to change the memory identification number of the memory area 2 without using information that cannot be managed by the owner of the original memory area, such as key information associated with the memory 2. More specifically, changing of the memory identification number is performed using information packaged using key information of the owner of the original memory area, wherein the package information includes, for example, the identification number and the memory size of the memory area whose identification number is to be changed.

Note that it is allowed to change the identification number to a new identification number which is not assigned to any existing memory area. When a new identification number is specified, a smallest identification number is selected from those which are not currently used, and is employed as the new identification number. Note that in the changing of the memory identification number, the identification number 0 assigned to the original memory area is not allowed to be subjected to the changing of the memory identification number.

### E. Procedure of Dividing Memory Area

A procedure of creating a new file system by dividing a memory area is described in detail below.

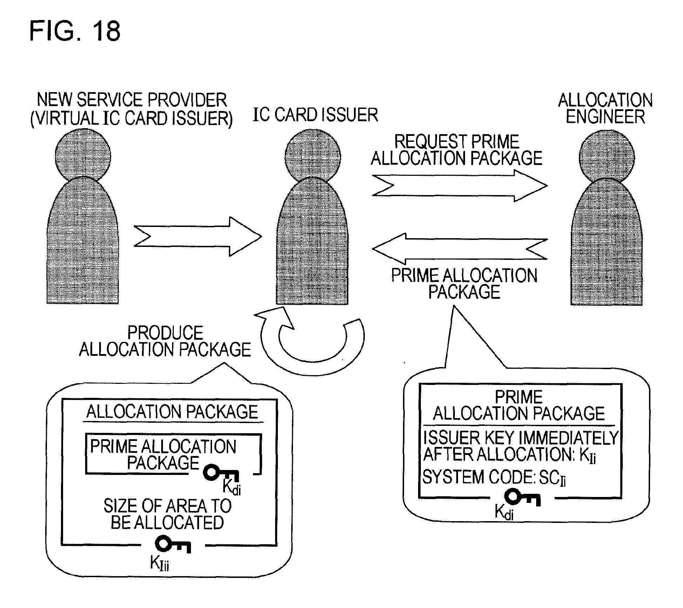

Fig. 18 shows a preprocess performed before a file system is created by dividing a memory area. When a new service provider wants to divide the file system in the memory area of the IC card, a preprocess is performed in which the new service provider requests the IC card issuer to give permission to use a particular memory area. If the IC card issuer decides to permit the new service provider to use a memory area, that is, to create a new file system, the IC card issuer acquires a "prime allocation package" needed to create the new file system from an allocation manager.

The allocation manager corresponds to the card memory area operator 22 who manages memory areas of produced, or produced and shipped, IC cards. The new service provider corresponds to the card memory area user 14 (see Fig. 2).

The allocation manager has the authority to assign system codes of respective file systems on the memory of the IC card, and manages an allocation authority key K_{d} stored in an operating system that provides an execution environment of the IC card. The allocation manager assigns an area key KIᵢ of a file system to be created by division (that is, an issuer key of the new service provider who is going to use this area (that is, a virtual IC card issuer)) and a system code SCᵢ (where i is a suffix indicating that this system code is created by i-th division). The allocation manager then produces a prime allocation package encrypted using the allocation authority key K_{d} such that the prime allocation package includes data blocks including the area key KIᵢ and the system code SCᵢ. The produced prime allocation package is supplied to the IC card issuer.

Because the IC card issuer does not have the allocation authority key K_{d}, the IC card issuer cannot read or alter the received prime allocation package.

The IC card issuer produces an allocation package encrypted using an issuer key Kᵢ such that the allocation package includes data blocks including the acquired prime allocation package and the size (the number of blocks) of an area to be allocated for use by the new service provider.

Because the allocation package is encrypted using the card issuer key Kᵢ managed by the IC card issuer using the file system of the IC card issuer, any person other than the IC card issuer cannot read the allocation package and cannot alter the size or other parameters of the memory area to be allocated.

After the IC card issuer has obtained the allocation package via the preprocess described above, the IC card issuer issues a request for division of the file system of the memory area in the IC card, using the acquired allocation package. Herein, to access the file system, the area ID of the file system is required as an argument. However, the IC card issuer knows only the system code and thus the IC card issuer polls the IC card to acquire the area ID of the file system of the IC card issuer.

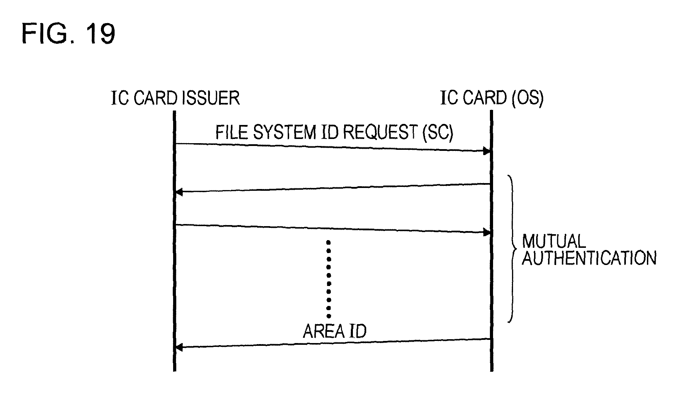

Fig. 19 shows a process of polling the IC card, performed by the IC card issuer. In this polling process, communication between the IC card issuer (or another external device) and the IC card is performed via a non-contact IC card interface using electromagnetic induction or via a wired connection interface such as an UART interface or an I²C interface (this also holds for other communications described elsewhere below).

More specifically, the IC card issuer polls the operating system that provides the execution environment of the IC card and issues a request command including the system code SC of the IC card issuer as an argument to acquire the area ID of the file system.

In response to the request message, a two-way multiple communication process is started between the requester (that is, the IC card issuer) and the operating system that provides the execution environment of the IC card. Via this communication, mutual authentication is performed, and the area ID is returned, as a response to the request, to the IC card issuer. The details of the authentication process vary depending on the specifications of the IC card. However, the details of the authentication process are not essential to the present invention, and thus a further description thereof is omitted herein.

Note that after the new service provider (that is, the virtual IC card issuer) acquires the file system newly produced by division, a polling process is performed in a similar manner when the new service provider acquires the area ID of the file system of the new service provider.

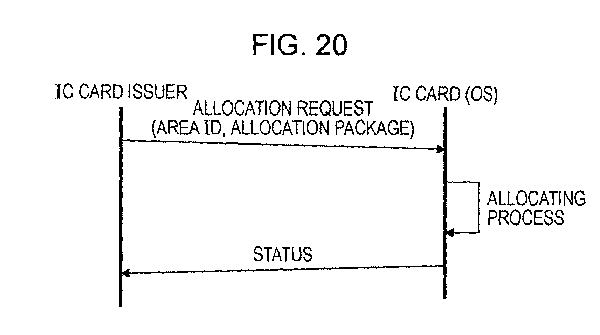

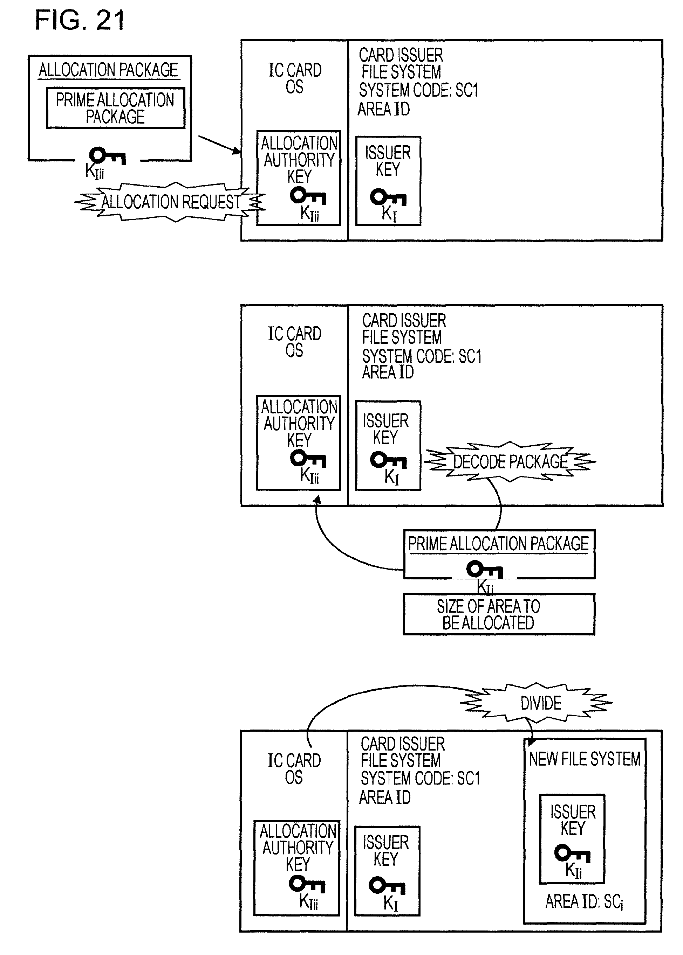

If the IC card issuer has acquired the area ID, the IC card issuer requests the operating system of the IC card to divide the file system. The file system division request issued by the IC card issuer includes the area ID of the IC card issuer and the allocation package as arguments. Because the allocation package is encrypted using the key Kᵢ of the IC card issuer, the allocation package is not altered by any third person. Fig. 20 shows a process performed by the IC card issuer to issue the file system division request to the IC card. Fig. 21 shows a manner in which the memory area of the IC card is divided and a new file system is produced. In this process, communication between the IC card issuer and the IC card is performed via a non-contact IC card interface using electromagnetic induction or via a wired connection interface such as an UART interface or an I²C interface.

If the operating system of the IC card receives the file system division request, the allocation package is transferred to the file system of the IC card issuer in accordance with the area ID included as an argument in the request. The encrypted allocation package is decoded using the key Kᵢ of the IC card issuer to extract the prime allocation package and the size (the number of blocks) of the memory area to be allocated to the new file system.

If the operating system of the IC card receives the prime allocation package and the size of the memory area to be allocated from the file system of the IC card issuer, the operating system of the IC card decodes the prime allocation package using the allocation authority key K_{d} to extract the area key K_{Ii} of the area to be allocated (that is, the issuer key of the new service provider (the virtual IC card issuer) who is going to use the area) and the system code SCᵢ. The operating system of the IC card then divides the area owned by the IC card issuer to produce a sub memory area with the specified size and assigns the issuer key K_{Ii} and the system code SCᵢ to this sub memory area thereby creating a new file system.

If the process of dividing the file system is completed, the status thereof is returned to the requester, that is, the IC card issuer.

Thus, the new service provider can acquire the file system, dedicated to the new service provider, in the memory area of the IC card issued by the IC card issuer. This makes it possible for the new service provider to provide services in substantially the same manner as the manner in which services would be provided using a separate IC card issued by the new service provider. In this sense, the new service provider can behave as a virtual IC card issuer.

In the initial state of the file system immediately after being created, the assigned issuer key K_{Ii} and the system code SCᵢ are those set by the allocation manager. In other words, the security of the file system of the new service provider relies on the allocation manager, and the new service provider is not allowed to analyze, manage, and handle the security.

To avoid the above-described problem, it is desirable that after the new service provider has acquired the file system dedicated to the new service provider built in the memory area of the IC card, the new service provider reset the issuer key K_{Ii} and the system code SCᵢ. When the resetting is performed, adjustment of the size of the allocated area may also be performed.

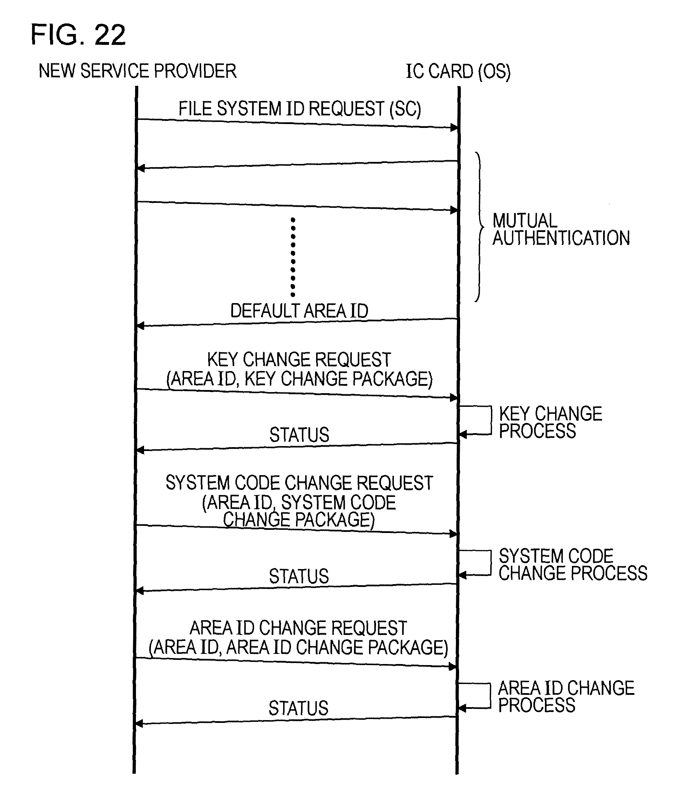

Fig. 22 shows a process of resetting the issuer key K_{Ii} and the system code SCᵢ performed by the new service provider after the file system dedicated to the new service provider has been built in the memory area of the IC card. In this process, communication between the service provider and the IC card is performed via a non-contact IC card interface using electromagnetic induction or via a wired connection interface such as an UART interface or an I²C interface.

The new service provider polls the operating system that provides the execution environment of the IC card and sends a request message to the operating system to acquire the area ID of the file system, wherein the request message includes, as an argument, the system code SCᵢ assigned at the point of time immediately after the acquisition of the file system dedicated to the new service provider.

In response to the request message, a two-way multiple-transmission communication process is started between the service provider and the operating system that provides the execution environment of the IC card. Via this communication, mutual authentication is performed, and a default area ID, which was assigned by the allocation manager when the file system was divided, is returned to the service provider as a response to the request. The details of the authentication process vary depending on the specifications of the IC card. However, the details of the authentication process are not essential to the present invention, and thus a further description thereof is omitted herein.

Following the authentication process, the service provider requests the operating system of the IC card to change the issuer key K_{Ii} from the default value. This key change request includes the default area ID and a key change package as arguments. Note that the key change package is encrypted using the default issuer key K_{Ii} so that the key change package is not altered by a third party.

If the operating system of the IC card receives the key change request, the key change package is transferred to the file system of the service provider in accordance with the area ID included as an argument in the request. The encrypted key change package is decoded using the card issuer key K_{Ii} to obtain the original key change package. The card issuer key of the file system is changed from the K_{Ii} to K_{Ii}' and the status thereof is returned to the requester, that is, the service provider.

Subsequently, the service provider requests the operating system of the IC card to change the system code SCᵢ from the default value. This system code change request includes the default area ID and a system code change package as arguments. Note that the system code change package is encrypted using the new issuer key K_{Ii}' so that the system code change package is not altered by a third party.

If the operating system of the IC card receives the system code change request, the key change package is transferred to the file system of the service provider in accordance with the area ID included as an argument in the request. The encrypted system code change package is decoded using the card issuer key K_{Ii}' to extract the original system code change package. The system code of the file system is then changed to SCᵢ' from the default value SCᵢ and the status thereof is returned to the requester, that is, the service provider.

Subsequently, the service provider requests the operating system of the IC card to change the area IDᵢ from the default value. This system code change request includes the default area ID and an area code change package as arguments. Note that the area ID change package is encrypted using the new issuer key K_{Ii}' so that the area ID change package is not altered by a third party.

If the operating system of the IC card receives the area ID change request, the area ID change package is transferred to the file system of the service provider in accordance with the area ID included as an argument in the request. The encrypted area ID change package is decoded using the card issuer key K_{Ii}' to extract the original area ID change package. The area ID of the file system is then changed to IDᵢ' from the default value IDᵢ and the status thereof is returned to the requester, that is, the service provider.

Thus, the new service provider obtains the securely set issuer key K_{Ii}' and the system code SCᵢ' of the file system dedicated to the new service provider in the above-described manner whereby the new service provider can analyze, manage, and handle the security independently of the original IC card issuer.

### F. Process of Releasing Allocation of Memory Area

When the memory space of the IC card is logically divided and used, there is a possibility that a particular memory area becomes unnecessary, for example, because provision of a particular service is stopped. In such a case, it is possible to release only this particular memory area that has become unnecessary after the memory area was allocated via the dividing process described above in the previous paragraph E, thereby to make it possible to reuse this memory area for another service without influencing other memory areas being currently used.

A process of releasing a memory area, that is, a process of deleting a file system built in a memory area allocated via a division process and releasing the allocation is described in detail below.

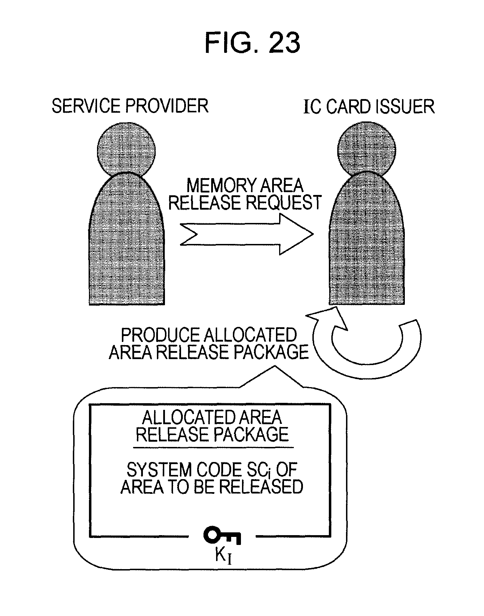

Fig. 23 shows a preprocess performed before a file system built in a particular memory area allocated via the division process is deleted. When a service provider decides to delete a file system in an allocated memory area, dedicated to the service provider, of the IC card, the service provider performs the preprocess to request the IC card issuer to give permission to release the memory area.

If the IC card issuer decides to give permission to release the memory area, that is, to delete the file system, the IC card issuer produces an allocation release package encrypted using the issuer key Kᵢ of the IC card issuer such that the allocation release package includes data blocks including a system code SCᵢ of the memory area to be released. Because the allocation release package is encrypted using the card issuer key Kᵢ managed by the IC card issuer using the file system of the IC card issuer, a third party cannot read the allocation release package and cannot alter the size or other parameters of the memory area to be released.

After the IC card issuer has obtained the allocation release package via the preprocess described above, the IC card issuer issues a request for release of the file system in the memory area in the IC card, using the obtained allocation release package. Herein, the access to the file system is performed using the area ID of the file system as an argument. However, the IC card issuer knows only the system code and thus the IC card issuer polls the IC card to acquire the area ID of the file system of the IC card issuer. (see Fig. 19).

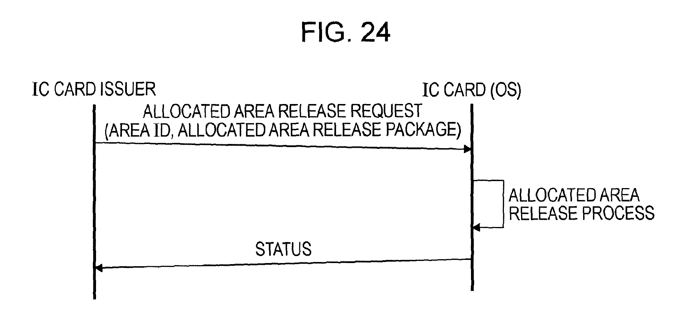

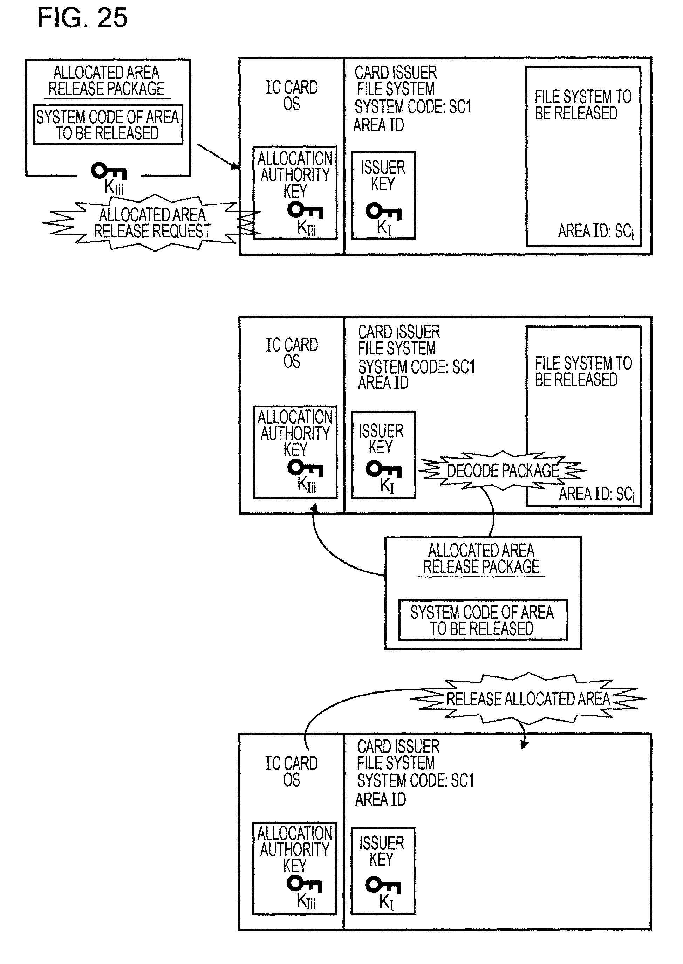

If the IC card issuer has acquired the area ID, the IC card issuer requests the operating system of the IC card to release the file system. This file system release request includes the area ID of the IC card issuer and the allocation release package as arguments. Note that the allocation release package is encrypted using the card issuer key Kᵢ so that the allocation release package is not altered by a third party. Fig. 24 shows a process performed by the IC card issuer to issue the file system release request to the IC card. Fig. 25 shows a manner in which the memory area allocated on the IC card via the division process is released and returned to the file system of the IC card issuer. In this process, communication between the IC card issuer and the IC card is performed via a non-contact IC card interface using electromagnetic induction or via a wired connection interface such as an UART interface or an I²C interface.

If the operating system of the IC card receives the allocation release request, the allocation release package is transferred to the file system of the IC card issuer in accordance with the area ID included as an argument in the request. The encrypted allocation release package is decoded using the key Kᵢ of the IC card issuer and the system code SCᵢ of the memory area (the file system) to be released is extracted.

If the operating system of the IC card receives the system code SCᵢ of the memory area (the file system) to be released, the operating system of the IC card releases the specified file system and consolidates it into the original file system owned by the IC card issuer.

If the process of releasing the file system is completed, the status thereof is returned to the requester, that is, the service provider.

The service provider can release the unnecessary file system dedicated to the service provider in the above-described manner thereby to make it possible to reuse this memory area for another service without influencing other memory areas being currently used. This makes it possible to make effective use of the memory in the IC card, which is a limited resource.

### G. Process of Expanding or Reducing the Size of Allocated Memory Area

When the memory space of the IC card is logically divided and used, it is not necessarily possible to definitively determine the size of each memory area at the point of time at which the original memory area is divided. To solve the above problem, it is allowed to change the size of each memory area allocated via the division process described above in paragraph E. This makes it unnecessary to allocate a memory so as to have a large size including a margin to avoid shortage of memory space in future usage. It is also possible to reduce the memory size when the memory size becomes too large. This capability of changing the memory size makes it possible to make effective use of the limited memory space.

A process of expanding or reducing the size of a file system built in a memory area allocated via a division process is described in detail below.

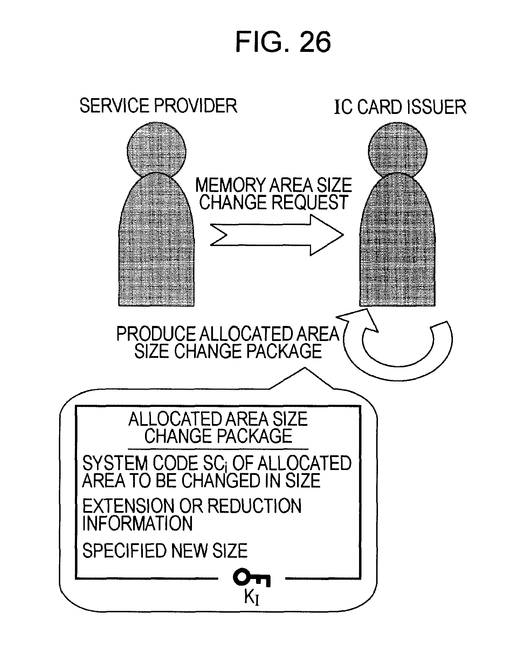

Fig. 26 shows a preprocess performed before the size of a file system built in a particular memory area allocated via the division process is changed. When a service provider decides to expand or reduce the size of a file system in an allocated memory area, dedicated to the service provider, of the IC card, the service provider performs the preprocess to request the IC card issuer to give permission to change the size of the memory area.

If the IC card issuer decides to give permission to change the size of the memory area, the IC card issuer produces an allocated area size change package encrypted using the issuer key Kᵢ of the IC card issuer such that the allocated area size change package includes data blocks including a system code SCᵢ of the memory area to be released, size expansion/reduction information, and information specifying the new size. Because this allocated area size change package is encrypted using the card issuer key Kᵢ managed by the IC card issuer using the file system of the IC card issuer, a third party cannot read the allocated area size change package and cannot alter the size or other parameters of the memory area to be changed.

After the IC card issuer has obtained the allocated area size change package via the preprocess described above, the IC card issuer issues a request to change the allocated area size of the file system in the memory area in the IC card, using the obtained allocated area size change package. Herein, the access to the file system is performed using the area ID of the file system as an argument. However, the IC card issuer knows only the system code and thus the IC card issuer polls the IC card to acquire the area ID of the file system of the IC card issuer (see Fig. 19).

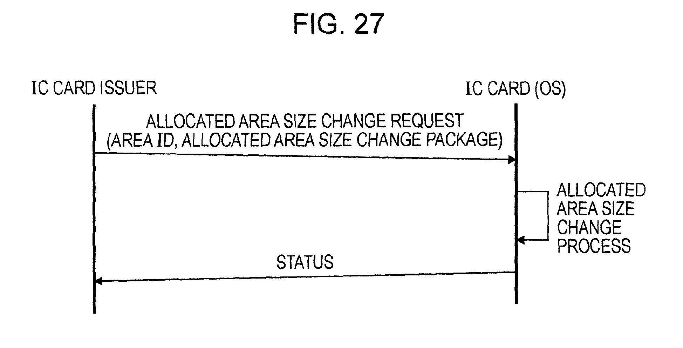

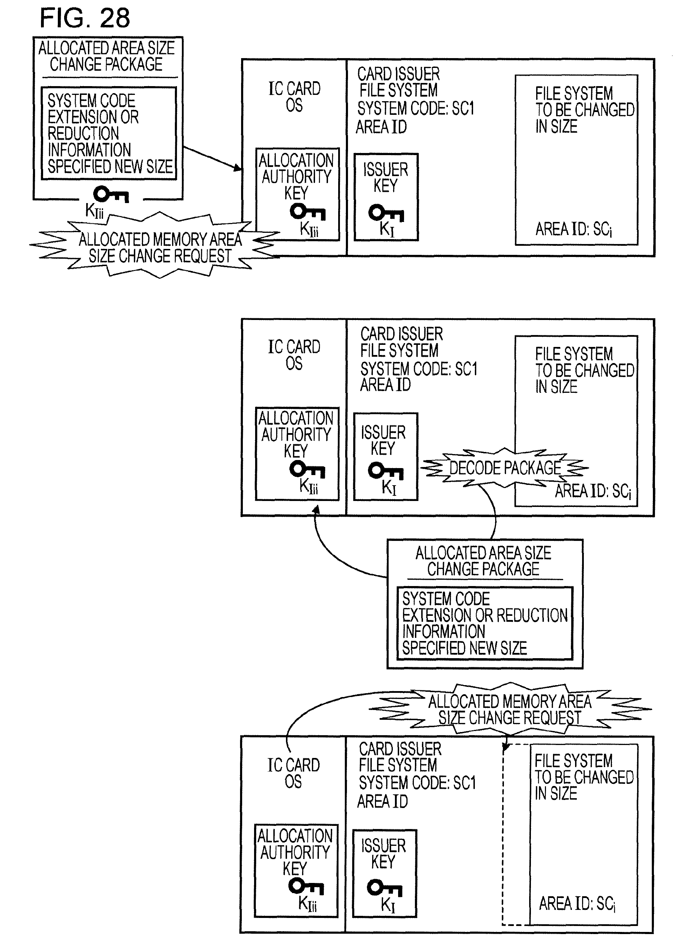

If the IC card issuer has acquired the area ID, the IC card issuer requests the operating system of the IC card to change the allocated area size of the file system. This allocated area size change request includes the area ID of the IC card issuer and the allocated area size change package as arguments. Note that the allocated area size change package is encrypted using the card issuer key Kᵢ so that the allocated area size change package is not altered by a third party. Fig. 27 shows a process performed by the IC card issuer to issue the allocated area size change request to the IC card. Fig. 28 shows a manner in which the size of the memory area allocated on the IC card via the division process is changed. In this process, communication between the IC card issuer and the IC card is performed via a non-contact IC card interface using electromagnetic induction or via a wired connection interface such as an UART interface or an I²C interface.

If the operating system of the IC card receives the allocated area size change request, the allocated area size change package is transferred to the file system of the IC card issuer in accordance with the area ID included as an argument in the request. The allocated area size change package is decoded using the card issuer key Kᵢ, and the system code SCᵢ of the memory area (the file system) whose size is to be changed is extracted.

If the operating system of the IC card receives the system code SCᵢ of the file system whose size is to be changed, the operating system of the IC card changes the size of the specified file system. Note that when the size of the file system is expanded, a part of the memory area owned by the IC card issuer is additionally allocated to expand the size of the file system. Therefore, it is necessary that the memory area owned by the IC card issuer have a free space with a size equal to or greater than the specified size to be additionally allocated. Conversely, when the size of the file system is reduced, it is necessary that the file system have a free space with a size equal to or greater than the specified size to be subtracted.

If the process of changing the allocated area size of the file system is completed, the status thereof is returned to the requester, that is, the service provider.

The service provider can change the size of file system dedicated to the service provider in the above-described manner. This makes it unnecessary to allocate a memory so as to have a large size including a margin to avoid shortage of memory space in future usage. It is also possible to reduce the memory size when the memory size becomes too large. This capability of changing the memory size makes it possible to make effective use of the limited memory space. Industrial Applicability

The present invention has been described above with reference to specific embodiments. It should be apparent to those skilled in the art that various modifications and substitutions are possible without departing from the spirit and the scope of the invention.

In the above description of the present invention with reference to specific embodiments, it has been assumed that the present invention is applied, by way of example, to a portable terminal in which an IC card or an IC chip is installed. In particular, discussion has been focused on the technique of dividing a memory space of the IC card into a plurality of memory areas, releasing a memory area produced by the division thereby releasing the memory resource, and increasing or reducing the size of a memory area produced by the division. Note that the present invention is not limited to the details of these embodiments. For example, the present invention may also be applied to a memory device of a type other than the IC card or the IC chip so that the memory device can be used in a similar manner as described above.

That is, the embodiments have been described above by way of example and not limitation, and the scope of the invention is to be determined solely by the claims.

## Claims

1. An information management apparatus having a memory space and adapted to manage the memory space in a form in which the memory space is divided into one or more memory areas,
the memory space including a first memory area owned by an original owner and one or more second memory areas divided from the first memory area owned by the original owner and respectively allocated to one or more service providers,
the information management apparatus including allocated area release means for releasing a specified second memory area and returning the released second memory area to the first memory area in accordance with a request issued by a service provider.

2. The information management apparatus according to Claim 1, further including access control means for controlling access to each memory area in accordance with a corresponding key of a service provider,
wherein the allocated area release means receives a data block including information identifying a second memory to be released, in the form of an allocated area release package encrypted using a key of the owner of the first memory area, decrypts the allocated area release package using the key of the owner of the first memory area, and releases the second memory area specified by the data block.

3. An information management apparatus having a memory space and adapted to manage the memory space in a form in which the memory space is divided into one or more memory areas,
the memory space including a first memory area owned by an original owner and one or more second memory areas divided from the first memory area owned by the original owner and respectively allocated to one or more service providers,
the information management apparatus including allocated area size changing means for expanding or reducing the size of a second memory area already divided from the first memory area in accordance with a request issued by a service provider.

4. The information management apparatus according to Claim 3, wherein when the size of the second memory area is expanded, the allocated area size changing means additionally allocates a free area of the first memory area to the second memory area by a specified amount by which to expand the size of the second memory area, while when the size of the second memory area is reduced, the allocated area size changing means returns a free area of the second memory area to the first memory area by a specified amount by which to reduce the size of the second memory area.

5. The information management apparatus according to Claim 3, further including access control means for controlling access to each memory area in accordance with a corresponding key of a service provider,
wherein the allocated area size changing means receives a data block including information identifying a second memory area whose size is to be changed, information indicating whether to expand or reduce the size of the second memory area, and information indicating the size by which to expand or reduce the second memory area, in the form of an allocated area size change package encrypted using a key of the owner of the first memory area, decrypts the allocated area size change package using the key of the owner of the first memory area, and changes the size of the second memory area by an amount specified by the data block.

6. An information management apparatus having a memory space and adapted to manage the memory space in a form in which the memory space is divided into one or more memory areas,
the memory space including a first memory area owned by an original owner and one or more second memory areas divided from the first memory area owned by the original owner and respectively allocated to one or more service providers, each second memory area having identification information assigned when the second memory area is divided from the first memory area,
the information management apparatus including identification information changing means for changing identification information assigned to a second memory area in accordance with a request issued by a service provider.

7. The information management apparatus according to Claim 6, wherein the identification information changing means changes identification information of a second memory area owned by a service provider to identification information that has been released as a result of releasing a second memory area owned by another service provider.

8. The information management apparatus according to Claim 6, further including access control means for controlling access to each memory area in accordance with a corresponding key of a service provider,
wherein the identification information changing means receives a data block including identification information of a second memory area whose identification information is to be changed and identification information to which to change the current identification information, in the form of an identification information change package encrypted using a key of the owner of the first memory area, decrypts the identification information change package using the key of the owner of the first memory area, and changes the identification information of the second memory area to the identification information specified by the data block.

9. An information management method of managing a memory space in a form in which the memory space is divided into one or more memory areas,
the memory space including a first memory area owned by an original owner and one or more second memory areas divided from the first memory area owned by the original owner and respectively allocated to one or more service providers,
the method including the step of releasing a specified second memory area and returning the released second memory area to the first memory area in accordance with a request issued by a service provider.

10. The information management method according to Claim 9, further including the step of controlling access to each memory area in accordance with a corresponding key of a service provider,
wherein the second memory area releasing step includes receiving a data block including information identifying a second memory to be released, in the form of an allocated area release package encrypted using a key of the owner of the first memory area, decrypting the allocated area release package using the key of the owner of the first memory area, and releasing the second memory area specified by the data block.

11. An information management method of managing a memory space in a form in which the memory space is divided into one or more memory areas,
the memory space including a first memory area owned by an original owner and one or more second memory areas divided from the first memory area owned by the original owner and respectively allocated to one or more service providers,
the method including the step of expanding or reducing the size of a second memory area already divided from the first memory area in accordance with a request issued by a service provider.

12. The information management method according to Claim 11, wherein in the allocated area size changing step, when the size of the second memory area is expanded, a free area of the first memory area is additionally allocated to the second memory area by a specified amount by which to expand the size of the second memory area, while when the size of the second memory area is reduced, a free area of the second memory area is returned to the first memory area by a specified amount by which to reduce the size of the second memory area.

13. The information management method according to Claim 11, further including the step of controlling access to each memory area in accordance with a corresponding key of a service provider,
wherein the allocated area size changing step includes receiving a data block including information identifying a second memory area whose size is to be changed, information indicating whether to expand or reduce the size of the second memory area, and information indicating the size by which to expand or reduce the second memory area, in the form of an allocated area size change package encrypted using a key of the owner of the first memory area, decrypting the allocated area size change package using the key of the owner of the first memory area, and changing the size of the second memory area by an amount specified by the data block.

14. An information management method of managing a memory space in a form in which the memory space is divided into one or more memory areas,
the memory space including a first memory area owned by an original owner and one or more second memory areas divided from the first memory area owned by the original owner and respectively allocated to one or more service providers, each second memory area having identification information assigned when the second memory area is divided from the first memory area,
the method including the step of changing identification information assigned to a second memory area in accordance with a request issued by a service provider.

15. The information management method according to Claim 14, wherein the identification information changing step includes changing identification information of a second memory area owned by a service provider to identification information that has been released as a result of releasing a second memory area owned by another service provider.

16. The information management method according to Claim 14, further including the step of controlling access to each memory area in accordance with a corresponding key of a service provider,
wherein the identification information changing step includes receiving a data block including identification information of a second memory area whose identification information is to be changed and identification information to which to change the current identification information, in the form of an identification information change package encrypted using a key of the owner of the first memory area, decrypting the identification information change package using the key of the owner of the first memory area, and changing the identification information of the second memory area to the identification information specified by the data block.
